# FASCICULE DE BREVET EUROPEEN

(11) **EP 3 186 674 B1**
(45) Date de publication et mention de la délivrance du brevet: **24.02.2021**
(21) Numéro de dépôt: 15759397.1
(22) Date de dépôt: 14.08.2015
(51) Int. Cl.: G02B 23/00, F21V 8/00

(54) **DISPOSITIF D'ECLAIRAGE A DIODES ELECTROLUMINESCENTES COMPORTANT UN GUIDE DE LUMIERE ET UN ECLAIRAGE COMPATIBLE AVEC L'UTILISATON DE JUMELLES DE VISION NOCTURNE**
LEUCHTDIODENBELEUCHTUNGSVORRICHTUNG MIT EINEM LICHTLEITER UND EINEM LICHT, DAS MIT DER VERWENDUNG EINES NACHTSICHTFERNGLASES KOMPATIBEL IST
LIGHT-EMITTING DIODE LIGHTING DEVICE COMPRISING A LIGHT GUIDE AND A LIGHT COMPATIBLE WITH THE USE OF NIGHT VISION BINOCULARS

(30) Priorité: 29.08.2014 FR 1401927
(43) Date de publication de la demande: 05.07.2017
(73) Titulaire: THALES, 92400 Courbevoie (FR)
(72) Inventeur: PETITDEMANGE, Arnaud, F-33187 Le Haillan Cedex (FR); PELLETIER, Sébastien, F-33187 Le Haillan Cedex (FR); LUX, Johanna, F-33187 Le Haillan Cedex (FR); MOZER, Laurent, F-33700 Merignac (FR)
(74) Mandataire: Marks & Clerk France
(86) Numéro de dépôt international: PCT/EP2015/068786
(87) Numéro de publication internationale: WO 2016/030216

(56) Documents cités:
- FR-A1- 2 820 235
- US-A1- 2014 022 156
- US-A1- 2014 036 533
- US-B1- 7 924 371
- US-B1- 8 475 028
- US-B1- 8 628 206
- US-B1- 8 641 219

## Description

Le domaine de l'invention est celui des dispositifs d'éclairage compatibles « NVG » à diodes électroluminescentes pour écrans plats de visualisation tels que les matrices à cristaux liquides. On entend par éclairage compatible NVG, un éclairage pouvant être utilisé avec des jumelles à amplification de lumière dites NVG pour « Night Vision Goggle », c'est-à-dire un éclairage tel qu'il ne sature pas les systèmes d'amplification des jumelles. Les dispositifs d'éclairages sont également connus sous la terminologie anglo-saxonne de « backlighting ». Les écrans plats ont de multiples applications. Ils peuvent être utilisés, par exemple, pour réaliser des dispositifs de visualisation de cockpits d'aéronefs.

Les dispositifs d'amplification des jumelles de vision de nuit ont un coefficient d'amplification important dans une bande spectrale commençant à l'extrémité rouge du spectre visible, autour de 650 nanomètres et finissant dans l'infrarouge proche, autour de 930 nanomètres. Les diodes émettant dans le vert ou dans le bleu sont naturellement compatibles NVG, leur émission dans le rouge ou le proche infrarouge étant très faible ou inexistante. Il n'en est pas de même des diodes émettant dans le rouge qui doivent être filtrées de façon à ne pas saturer les jumelles.

Il existe différents types de backlighting compatibles NVG.

Une première solution consiste à utiliser des sources de lumière rouges naturellement compatibles NVG dont l'émission dans les plus hautes longueurs d'onde du rouge est donc réduite. Ainsi, le brevet EP 1 974 190 intitulé « Night vision compatible display backlight » de la société « Astronautics Corporation of America » propose un éclairage comportant des diodes « orange » compatibles NVG. L'inconvénient principal de cette solution est que la colorimétrie de l'image de « jour » est sensiblement modifiée.

Une seconde solution consiste à disposer un filtre NVG couvrant la totalité des diodes émettrices. On retrouve l'inconvénient précédent. Une variante de cette solution consiste à disposer les filtres uniquement au-dessus des diodes émettant dans le rouge de façon à réaliser le meilleur compromis possible entre la compatibilité NVG et la colorimétrie. Le brevet FR 2 942 023 de la demanderesse intitulée « Dispositif d'éclairage à diodes électroluminescentes compatible NVG » propose une solution technique de ce type.

Une troisième solution consiste à disposer un éclairage spécifique indépendant de l'éclairage de jour pour assurer l'éclairage NVG. Le brevet EP 0 560 614 de la société Kaiser Aerospace & Electronics Corporation intitulé « Backlight for a liquid crystal display » propose une solution de ce type. Le mélange des sources d'éclairage est assuré par un guide de lumière prismatique. Cette solution permet de préserver la colorimétrie de jour. Elle présente cependant un encombrement plus important que les dispositifs précédents et nécessite l'ajout de composants optiques.

De façon générale, les backlightings peuvent être regroupés en deux architectures. La première architecture consiste à former un tapis de diodes électroluminescentes disposées directement sous la matrice à cristaux liquides à éclairer.

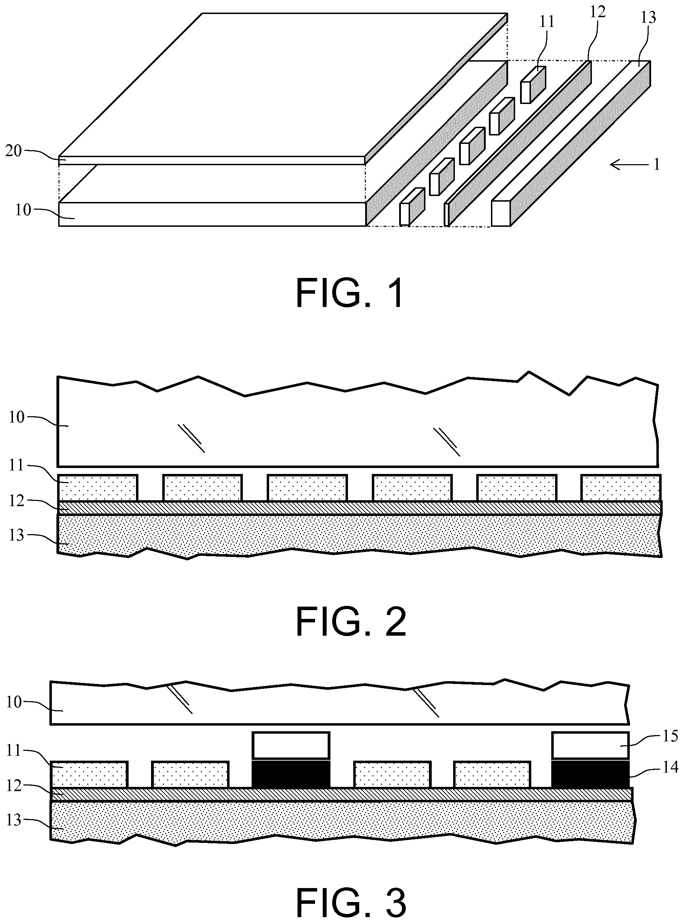

La seconde architecture consiste à éclairer un guide de lumière par la tranche. Elle est représentée sur les figures 1 et 2. La figure 1 représente une vue éclatée des différents composants du backlighting, la figure 2 représente une vue en coupe partielle dans le plan des diodes d'éclairage. Le backlighting 1 comporte alors :
- un guide de lumière 10 sensiblement de forme parallélépipédique ou prismatique, d'épaisseur faible, disposé sous la matrice à cristaux liquides 20 à éclairer ;
- un éclairage constitué de diodes électroluminescentes d'éclairage 11 disposées en ligne ;
- un circuit d'alimentation 12 des diodes électroluminescentes ;
- une structure mécanique 13 qui porte le circuit d'alimentation 12 et les diodes d'éclairage 11.

Pour que cet éclairage soit compatible NVG, une solution technique possible consiste à disposer un filtre NVG sur certaines diodes émettant dans le rouge. La figure 3 représente une vue dans le plan de coupe précédent de cette implantation. Sur cette figure 3, les diodes 14 filtrées sont représentées en noir et elles sont surmontées d'un filtre 15 représenté schématiquement par un rectangle blanc. Cette solution technique présente les défauts suivants :
- L'encombrement des LEDs filtrées est supérieur à celui des LEDs non filtrées. Cet encombrement impose que le guide de lumière soit éloigné de la barrette des LEDs d'éclairage de jour. Ceci occasionne une perte d'efficacité lumineuse du système d'éclairage pour le mode d'éclairage de jour où ce paramètre est très important ;
- Il est nécessaire que le filtrage des LEDs NVG soit parfaitement efficace et qu'il n'y ait aucune fuite de lumière en dehors du filtre. Il est donc important que la LED NVG soit entourée d'une zone absorbant la lumière ne passant pas dans le filtre. Un corps noir ou l'ajout d'un capuchon noir autour de la LED est alors nécessaire.
   ∘ La présence de cet élément absorbant augmente l'écartement entre les diodes et en réduit le nombre, ce qui limite le nombre de LEDs utilisables en mode normal et réduit donc la puissance lumineuse du backlighting de jour ;
   ∘ La présence de cet élément absorbant à proximité des LEDs du mode normal nuit aussi à l'efficacité d'injection des LEDs du mode normal dans le guide en absorbant une partie du flux lumineux de ces LEDs.

Le document US 7 924 371 propose, pour diminuer l'encombrement du backlighting, de déposer les diodes électroluminescentes assurant l'éclairage compatible NVG sur la face inférieure du circuit imprimé rigide qui porte, sur sa face supérieure, les diodes assurant l'éclairage de jour. Les diodes assurant l'éclairage de nuit sont logées à l'intérieur même du circuit imprimé dans des ouvertures fermées par des filtres optiques compatibles NVG. Cette solution nécessite d'avoir un circuit imprimé double face.

Le dispositif d'éclairage selon l'invention ne présente pas ces inconvénients. L'agencement des diodes électroluminescentes filtrées est tel que ces diodes n'introduisent pas de contraintes supplémentaires sur l'éclairage principal de jour. Plus précisément, l'invention a pour premier objet un dispositif d'éclairage compatible avec l'utilisation des jumelles de vision de nuit, ledit dispositif d'éclairage comportant au moins :
une rangée de premières diodes électroluminescentes portées et alimentées par un circuit électronique imprimé flexible
une pièce mécanique sur laquelle est fixé le circuit électronique ;
une seconde diode électroluminescente surmontée d'un filtre optique, ledit filtre optique ayant une transmission spectrale telle que la lumière issue de la seconde diode filtrée par ledit filtre soit compatible avec l'utilisation desdites jumelles de vision de nuit,
caractérisé en ce que la pièce mécanique comporte au moins un logement creux dans lequel est fixée la seconde diode électroluminescente filtrée, la profondeur du logement étant suffisante pour que la partie supérieure du filtre optique ne dépasse la partie supérieure des premières diodes électroluminescentes.

Avantageusement, la pièce mécanique comporte un épaulement dans lequel se loge le filtre optique, la fixation du filtre optique dans l'épaulement étant étanche à la lumière.

Avantageusement, le circuit électronique est un circuit imprimé flexible portant à la fois les premières diodes électroluminescentes et la seconde diode électroluminescente, ledit circuit imprimé flexible comportant au moins deux échancrures agencées de façon que la seconde diode électroluminescente soit disposée à une hauteur différente des premières diodes électroluminescentes.

L'invention a également pour second objet un système d'éclairage compatible avec l'utilisation des jumelles de vision de nuit, le dit système comportant un dispositif d'éclairage et un guide de lumière en forme de parallélépipède mince, ledit dispositif d'éclairage disposé sur une des tranches du guide de lumière, ledit dispositif d'éclairage comportant au moins :
une rangée de premières diodes électroluminescentes portées et alimentées par un circuit électronique, imprimé flexible une pièce mécanique sur laquelle est fixé le circuit électronique ;
une seconde diode électroluminescente surmontée d'un filtre optique, ledit filtre optique ayant une transmission spectrale telle que la lumière issue de la seconde diode filtrée par ledit filtre soit compatible avec l'utilisation desdites jumelles de vision de nuit,
caractérisé en ce que la pièce mécanique comporte au moins un logement creux dans lequel est fixée la seconde diode électroluminescente filtrée, la profondeur du logement étant suffisante pour que la partie supérieure du filtre optique ne dépasse la partie supérieure des premières diodes électroluminescentes, ladite partie supérieure des premières diodes électroluminescentes étant au contact ou au voisinage immédiat de ladite tranche du guide de lumière.

L'invention sera mieux comprise et d'autres avantages apparaîtront à la lecture de la description qui va suivre donnée à titre non limitatif et grâce aux figures annexées parmi lesquelles :
la figure 1 représente une vue éclatée d'un backlighting comportant un éclairage de jour ;
la figure 2 représente une vue en coupe partielle dudit backlighting de jour ;
la figure 3 représente une vue en coupe partielle d'un backlighting comportant un éclairage compatible NVG selon l'art antérieur ;
la figure 4 représente une vue en coupe partielle d'un backlighting comportant un éclairage compatible NVG selon l'invention ;
la figure 5 représente un circuit électronique d'alimentation d'un backlighting comportant un éclairage compatible NVG selon l'invention.

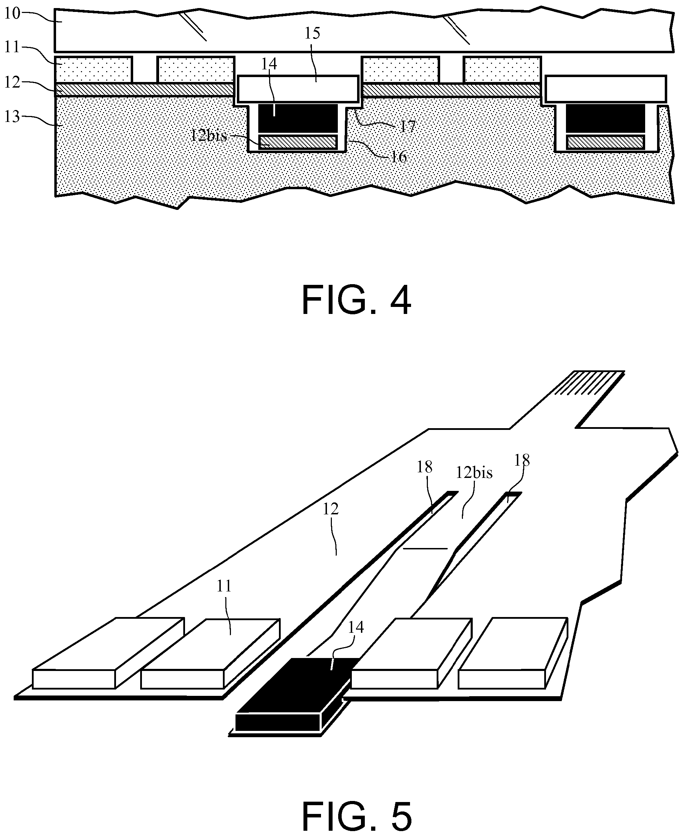

A titre d'exemple non limitatif, la figure 4 représente une vue en coupe partielle d'un backlighting comportant un éclairage compatible NVG selon l'invention. Ce dispositif d'éclairage comporte au moins :
- une rangée de premières diodes électroluminescentes 11 portées et alimentées par un circuit électronique 12. Ces diodes 11 sont destinées à assurer l'éclairage principal de jour. Généralement, elles émettent dans trois gammes spectrales différentes de façon à assurer un éclairage blanc. Le circuit électronique 12 est un circuit imprimé flexible ou « flex » ;
- une pièce mécanique 13 sur laquelle est fixé le circuit électronique 12 comportant des logements creux 16 ;
- des secondes diodes électroluminescentes 14 surmontées de filtres optiques 15, chaque filtre optique ayant une transmission spectrale telle que la lumière issue des secondes diodes 14 filtrées soit compatible avec l'utilisation desdites jumelles de vision de nuit.

Ces diodes sont généralement des diodes émettant dans la partie rouge du spectre et le filtre coupe le rayonnement situé au-delà d'une certaine longueur d'onde. Chaque seconde diode 14 est disposée dans un des logements creux 16. La profondeur des logements est suffisante pour que la partie supérieure du filtre optique 15 ne dépasse la partie supérieure des premières diodes électroluminescentes 11 comme on le voit sur la figure 4 ;
- un circuit électronique 12bis d'alimentation des secondes diodes électroluminescentes 14.

L'éclairage de nuit nécessite beaucoup moins de lumière que l'éclairage de jour. Aussi, le nombre de diodes filtrées est assez réduit par rapport au nombre de diodes non filtrées. Généralement, ce nombre de diodes filtrées ne dépasse pas le quart des diodes non filtrées.

Avantageusement, comme on le voit sur la figure 4, chaque logement 16 de la pièce mécanique support 13 comporte un épaulement 17 dans lequel se loge le filtre optique 15 de façon à assurer une parfaite étanchéité à la lumière qui n'aurait pas été filtrée par le filtre 15.

Avantageusement, les premières diodes 11 et les secondes diodes électroluminescentes 14 sont montées sur un circuit flex 12 unique qui comporte des échancrures 18 parallèles permettant de former des « languettes » souples 12bis sur lesquelles sont montées les secondes diodes 14. On peut ainsi disposer simplement avec un seul circuit imprimé les secondes diodes dans leurs logements 16 à des hauteurs différentes de celles des premières diodes 11.

Avantageusement, le backlighting selon l'invention éclaire un guide de lumière en forme de parallélépipède ou de prisme mince, le backlighting étant disposé suivant une des tranches du guide de lumière.

## Revendications

1. Dispositif d'éclairage (1) compatible avec l'utilisation des jumelles de vision de nuit, ledit dispositif d'éclairage comportant au moins :
une rangée de premières diodes électroluminescentes (11) portées et alimentées par un circuit électronique imprimé flexible (12),
une pièce mécanique (13) sur laquelle est fixé le circuit électronique;
une seconde diode électroluminescente (14) portée et alimentée par ledit circuit électronique imprimé flexible (12), ladite seconde diode (14) étant surmontée d'un filtre optique (15), ledit filtre optique ayant une transmission spectrale telle que la lumière issue de la seconde diode filtrée par ledit filtre soit compatible avec l'utilisation desdites jumelles de vision de nuit de façon à ne pas saturer lesdites jumelles,
ladite pièce mécanique (13) comporte au moins un logement creux (16) dans lequel est fixée la seconde diode électroluminescente filtrée, la profondeur du logement étant suffisante pour que la partie supérieure du filtre optique ne dépasse la partie supérieure des premières diodes électroluminescentes.

2. Dispositif d'éclairage selon la revendication 1, **caractérisé en ce que** la pièce mécanique (13) comporte un épaulement (17) dans lequel se loge le filtre optique (15), la fixation du filtre dans l'épaulement étant étanche à la lumière.

3. Dispositif d'éclairage selon la revendication 1, **caractérisé en ce que** le circuit électronique (12) est un circuit imprimé flexible portant à la fois les premières diodes électroluminescentes et la seconde diode électroluminescente, ledit circuit imprimé flexible comportant au moins deux échancrures (18) agencées de façon que la seconde diode électroluminescente (14) soit disposée à une hauteur différente des premières diodes électroluminescentes.

4. Système d'éclairage compatible avec l'utilisation des jumelles de vision de nuit, le dit système comportant un dispositif d'éclairage (1) et un guide de lumière (10) en forme de parallélépipède mince, ledit dispositif d'éclairage disposé sur une des tranches du guide de lumière, ledit dispositif d'éclairage étant selon l'une des revendications précédentes et, ladite partie supérieure des premières diodes électroluminescentes étant au contact ou au voisinage immédiat de ladite tranche du guide de lumière.

## Patentansprüche

1. Beleuchtungsvorrichtung (1), welche mit der Verwendung eines Nachtlichtfernglases kompatibel ist, wobei die Beleuchtungsvorrichtung mindestens Folgendes umfasst:
eine Reihe von ersten Leuchtdioden (11) welche durch eine flexible elektronische Leiterplatte (12) getragen und versorgt werden,
ein mechanisches Teil (13), an welchem der elektronische Schaltkreis befestigt ist;
eine zweite Leuchtdiode (14), welche durch die flexible elektronische Leiterplatte (12) getragen und versorgt wird, wobei die zweite Diode (14) mit einem optischen Filter (15) überlagert ist, wobei der optische Filter eine derartige spektrale Durchlässigkeit aufweist, dass das Licht, welches aus der durch den Filter gefilterten Diode stammt, in einer Weise mit dem Nachtsichtfernglas kompatibel ist, dass das Nachtsichtfernglas nicht übersättigt wird,
wobei das mechanische Teil (13) mindestens eine hohle Aufnahme (16) umfasst, in welcher die zweite gefilterte Leuchtdiode befestigt ist, wobei die Tiefe der Aufnahme ausreicht, damit der obere Teil des optischen Filters nicht über den oberen Teil der ersten Leuchtdioden hinausragt.

2. Beleuchtungsvorrichtung nach Anspruch 1, **dadurch gekennzeichnet, dass** das mechanische Teil (13) eine Schulter (17) umfasst, in welcher der optische Filter (15) aufgenommen wird, wobei die Befestigung des Filters in der Schulter lichtdicht ist.

3. Beleuchtungsvorrichtung nach Anspruch 1, **dadurch gekennzeichnet, dass** der elektronische Schaltkreis (12) eine flexible Leiterplatte ist, welche gleichermaßen die ersten Leuchtdioden und die zweite Leuchtdiode trägt, wobei die flexible Leiterplatte mindestens zwei Aussparungen (18) umfasst, welche so angeordnet sind, dass die zweite Leuchtdiode (14) in einer Höhe angeordnet ist, welche sich von derjenigen der ersten Leuchtdioden unterscheidet.

4. Beleuchtungssystem, welches mit der Verwendung des Nachtlichtfernglases kompatibel ist, wobei das System eine Beleuchtungsvorrichtung (1) und einen Lichtleiter (10) in Form eines schmalen Quaders umfasst, wobei die Beleuchtungsvorrichtung auf einer der Kanten des Lichtleiters angeordnet ist, wobei die Beleuchtungsvorrichtung eine Vorrichtung nach einem der vorhergehenden Ansprüche ist, und der obere Teil der ersten Leuchtdioden in Kontakt mit der Kante des Wellenleiters steht oder in der unmittelbaren Nachbarschaft davon ist.

## Claims

1. Lighting device (1) compatible with the use of night vision binoculars, the lighting device comprising at least:
one row of first light-emitting diodes (11) which are carried and supplied with power by a flexible printed electronic circuit (12),
a mechanical component (13) to which the electronic circuit is fixed;
a second light-emitting diode (14) which is carried and supplied with power by the flexible printed electronic circuit (12), the second diode (14) being surmounted by an optical filter (15), the optical filter having such a spectral transmission that the light emitted from the second diode filtered by the filter is compatible with the use of the night vision binoculars so as not to saturate the binoculars,
the mechanical component (13) comprises at least one hollow housing (16) in which the second filtered light-emitting diode is fixed, the depth of the housing being sufficient so that the upper portion of the optical filter does not exceed the upper portion of the first light-emitting diodes.

2. Lighting device according to claim 1, **characterised in that** the mechanical component (13) comprises a shoulder (17) in which the optical filter (15) is accommodated, the fixing of the filter in the shoulder being sealed with respect to light.

3. Lighting device according to claim 1, **characterised in that** the electronic circuit (12) is a flexible printed circuit which carries at the same time the first light-emitting diodes and the second light-emitting diode, the flexible printed circuit comprising at least two notches (18) which are arranged so that the second light-emitting diode (14) is arranged at a height different from the first light-emitting diodes.

4. Lighting system which is compatible with the use of the night vision binoculars, the system comprising a lighting device (1) and a light guide (10) in the form of a thin parallelepiped, the lighting device being arranged on one of the edges of the light guide, the lighting device being in accordance with one of the preceding claims, and the upper portion of the first light-emitting diodes being in contact with or in the immediate vicinity of said edge of the light guide.
